# EUROPEAN PATENT SPECIFICATION

(11) **EP 3 751 592 B1**
(45) Date of publication and mention of the grant of the patent: **16.11.2022**
(21) Application number: 19781491.6
(22) Date of filing: 26.03.2019
(51) Int. Cl.: H01H 85/042, H01H 85/048, H01H 85/11, H01H 85/12, H01H 85/06, H01H 85/08, H01H 85/175, H01H 85/18, H01H 85/143, H01H 85/38, H01M 50/581, H01H 85/147

(54) **HIGH-VOLTAGE FUSE**
HOCHSPANNUNGSSICHERUNG
FUSIBLE HAUTE TENSION

(30) Priority: 03.04.2018 CN 201820460110 U
(43) Date of publication of application: 16.12.2020
(73) Proprietor: Xiamen Set Electronics Co., Ltd, Xiamen, Fujian 361101 (CN)
(72) Inventor: HONG, Yaoxiang, Xiamen, Fujian 361101 (CN)
(74) Representative: Petculescu, Ana-Maria
(86) International application number: PCT/CN2019/079720
(87) International publication number: WO 2019/192356

(56) References cited:
- WO-A1-2014/109364
- WO-A1-2017/211295
- CN-A- 101 859 665
- CN-U- 203 071 028
- CN-U- 203 398 063
- CN-U- 203 398 063
- CN-U- 203 760 407
- CN-U- 203 839 326
- CN-U- 208 093 500
- US-A1- 2017 365 434

## Description

### TECHNICAL FIELD

The present invention relates to a fuse, and in particular to a high-voltage fuse.

### BACKGROUND

Since 2014, the electric vehicle market in China has entered a period of rapid development. In 2017, China's top-down promotion of new energy vehicles reached an unprecedented level, and a large-scale promotion was performed across the country. On January 11, 2018, the China Association of Automobile Manufacturers held a press conference on automobile production and sales data of December 2017, and it announced that the annual cumulative production and sales amounts of new energy vehicles in 2017 are 794,000 and 777,000, respectively, and their year-on-year increases are 53.8% and 53.3%, respectively.

Batteries are vital components in new energy vehicles. Since SONY Company commercialized lithium-ion batteries in 1991, lithium batteries have moved from the field of electronic products to the field of power tools and also to the field of electric vehicles and energy storage, and have become main bodies of power battery products. Due to the advantages of high energy density, large rate charge and discharge performance and long cycle life, the lithium batteries become the first choice of electric energy storage carriers.

On the other hand, the electrolyte used in the lithium battery is an organic liquid that becomes viscous or even condensed at low temperatures, which reduces the efficiency of lithium batteries at low temperatures. Related research shows that the optimal discharge temperature of the lithium battery used in the new energy vehicle is between 30-35°C. When the ambient temperature decreases, the internal resistance of the storage battery increases, the discharge current of the battery decreases, and the effective usable capacity also becomes smaller. When the temperature is below -10°C, charging the battery will greatly reduce the battery's lifetime. Therefore, preheating the lithium battery before starting has become a common practice in the high-end electric vehicle industry.

The heating system is configured to meet the normal use of the battery in a low-temperature environment and consists of a heating element and a circuit. The battery voltage of China's new energy vehicles is higher than that of foreign countries. It has the following advantages. Firstly, the energy consumption loss is small, and secondly, the drive power of the motor is high. Therefore, increasing the voltage will be a development direction. In the case of the same output power, increasing the battery pack voltage can reduce the operating current, which requires higher performance for peripheral components. High-voltage battery packs also have higher requirements for circuit protection components in the heating system.

A Chinese patent No. 201420230161.5 discloses a high-voltage direct current (DC) temperature fuse, which can reach a high-voltage DC thermal protection component of 15A and 450Vdc. However, the battery packs of mainstream domestic vehicle manufacturers all have voltage settings of above 500 Vdc, so high-voltage DC protection components are needed in the market.

Relevant patent documents include WO 2017/211295 A1 (XIAMEN SET ELECTRONICS CO LTD [CN]) 14 December 2017, which discloses a stack-type temperature safety device that includes two Z-shaped electrode members fixed to two side surfaces of a frame having separate compartments (103, 203) in a compartment constructed from a non-metal housing (101, 201) and a cover plate (102, 202). A fusible alloy (104, 204) wrapped by a flux (105, 205) is soldered between the two electrode members. A blocking plate divides the frame (103, 203) into independent compartments for respective fusible alloys (104, 204). In the event of an abnormal external temperature, heat is transferred to the fusible alloy (104, 204). The fusible alloy (104, 204) contracts, under tension of the flux (105, 205), towards two sides to effectively break a circuit. The safety device further comprises a heating system (200) with overheating protection that can receive a signal from a system to automatically heat the fusible alloy (104, 204), thereby providing the system with double protection.

CN 203 398 063 U (XIAMEN SET ELECTRONICS CO LTD [CN]) 15 January 2014 discloses a fuse in the shape of n that includes two pins that are respectively disposed at two ends of the fuse body. The two pins extend out from the top of the n-shaped fuse body and have two segments which are parallel to each other. The fuse also has a fusing cavity which covers the fuse body and the interiors of the joints of the fuse body with the pins, and the fusing cavity is filled with arc extinguishing materials.

### SUMMARY

In order to solve the above existing problems, an objective of the present invention is to provide a high-voltage fuse, which can effectively perform protection under high-voltage conditions.

The objective of the present invention is achieved by the following technical solutions.

A high-voltage fuse, including a temperature fuse device and a high-voltage breaking device, wherein the temperature fuse device and the high-voltage breaking device are connected in parallel; the high-voltage breaking device includes a fuse link, and the fuse link is an n-shaped structure with parallel segments at both ends thereof; and a resistance value of the temperature fuse device is lower than a resistance value of the fuse link, and a melting point of the temperature fuse device is lower than a melting point of the fuse link. The fuse link used commonly includes an alloy wire. Because the resistance value and melting point of the high-voltage breaking device are higher than those of the temperature fuse device, when a rated current is passed, most of the current-carrying capacity is mainly realized by the temperature fuse device. At the instant when the temperature fuse device achieves over-temperature fusing, the high-voltage breaking device remains in an on-state, and the current flows through the high-voltage breaking device. The current-carrying capacity of the alloy wire of the high-voltage breaking device is set to be less than the rated current, and when an overcurrent passe through the fuse link, the heat generation of the fuse link gradually increases, and the fuse link fuses by itself. An electric arc is inevitably generated during the breaking of the fuse link. Due to the arrangement of parallel segments formed by the n-shaped structure, a high electric field strength exists, electrons repel each other, and the electric arc is elongated to accelerate the recombination and diffusion of free electrons and positive ions, which can realize a protection behavior of rapid breaking.

Further, the high-voltage breaking device further includes a breaking insulating stopper provided between the parallel segments of the fuse link. The breaking insulating stopper is arranged to increase the creepage distance and improve the insulation tolerance.

Further, the temperature fuse device includes a fusible alloy, wherein a surface of the fusible alloy is coated with a fluxing agent.

Further, a plurality of fusible alloys are connected in parallel. Because the too thick fusible alloy is not conducive to shrinking, the cross-sectional area of the fusible alloy is designed according to different current-carrying capacity, and the fusible alloy is divided into a plurality of parallel structures.

Further, the temperature fuse device includes at least two fusible alloys, one of which has a lower resistivity and melting point than the other fusible alloys.

Further, the fusible alloy is an n-shaped structure with parallel segments at both ends thereof, and a fusing insulating stopper is provided between the parallel segments. In this way, the creepage distance and electrical clearance between the two electrodes are increased to improve the insulation withstand voltage capability.

Further, a left electrode piece and a right electrode piece are provided, and one end of the temperature fuse device and the high-voltage breaking device is connected to the left electrode piece, and the other end of the temperature fuse device and the high-voltage breaking device is connected to the right electrode piece; an insulating casing is further provided, and the temperature fuse device and the high-voltage breaking device are packaged in the insulating casing; and the left electrode piece and the right electrode piece are extended out of the insulating casing as lead-out ends.

Further, the insulating casing, the left electrode piece, the right electrode piece, and the high-voltage breaking device enclose a breaking cavity, and the insulating casing, the left electrode piece, the right electrode piece and the temperature fuse device enclose a fusing cavity. The two cavities separate from each other to ensure that the components in the cavities do not affect each other and are not contaminated.

Further, the breaking cavity is filled with an arc-extinguishing medium. The arc-extinguishing media used commonly is applicable, and the quartz sand is preferred in the present invention. In high-voltage applications, the electric arc is easy to cause gasification and expansion of the alloy wire. The arc-extinguishing medium can absorb the impact of gasification and cover the transmission path of the electric arc, which is beneficial to the insulation withstand voltage of the open circuit point.

Further, each of the left electrode piece and the right electrode piece includes an L-shaped connecting portion, and the L-shaped connecting portion and the temperature fuse device are vertically welded. In this way, the shrinkage surface of the temperature fuse device is increased to make the shrinkage more thorough, and the electrical clearance between the two electrode planes is increased.

The advantages of the present invention include at least as follows.

The high-voltage fuse of the present invention can realize an over-temperature fusing function. Due to the n-shaped structure of the fuse link, the electric arc may be cut off quickly to perform high-voltage breaking and protect the safety of the circuitry.

The above description is only an overview of the technical solutions of the present invention. In order to understand the technical means of the present invention more clearly, it can be implemented in accordance with the content of the description, and in order to make the above and other objectives, features and advantages of the present invention more obvious and understandable, the specific embodiments of the present invention are specifically exemplified below.

### BRIEF DESCRIPTION OF THE DRAWINGS

The present invention is further described below in conjunction with the following accompanying drawings.
FIG. 1 is a circuit schematic diagram of a high-voltage fuse according to the present invention;
FIG. 2 is an exploded schematic diagram of a high-voltage fuse according to Embodiment 1 of the present invention;
FIG. 3 is a schematic longitudinal sectional diagram of the high-voltage fuse according to Embodiment 1 of the present invention;
FIG. 4 is a schematic cross-sectional diagram of a temperature fuse device of the high-voltage fuse according to Embodiment 1 of the present invention;
FIG. 5 is a schematic cross-sectional diagram of a high-voltage breaking device of the high-voltage fuse according to Embodiment 1 of the present invention; and
FIG. 6 is an exploded schematic diagram of a high-voltage fuse according to Embodiment 2 of the present invention.

In the figures:
101 Temperature fuse device
102 High-voltage breaking device
103 First pin
104 Second pin
201 Outer casing
201a Fusing cavity
201b Breaking cavity
202 Cover plate
203 Breaking insulating stopper
204 Right electrode piece
204a Right L-shaped connecting portion
204b Right-side hole
205 Fusible alloy
206 Left electrode piece
206a Left L-shaped connecting portion
206b Left-side hole
207 Alloy wire
208 Fluxing agent
209 Quartz sand
210 Epoxy resin
211 Right soldering tin
212 Left soldering tin
301 Outer casing
302 Cover plate
302a Breaking insulating stopper
303 Breaking insulating stopper
304 Right electrode piece
304a Right boss
304b Right-side hole
305 Fusible alloy
306 Left electrode piece
306a Left boss
306b Left-side hole
307 Alloy wire

### DETAILED DESCRIPTION OF THE EMBODIMENTS

The present invention is specifically described below with reference to the accompanying drawings.

### Embodiment 1

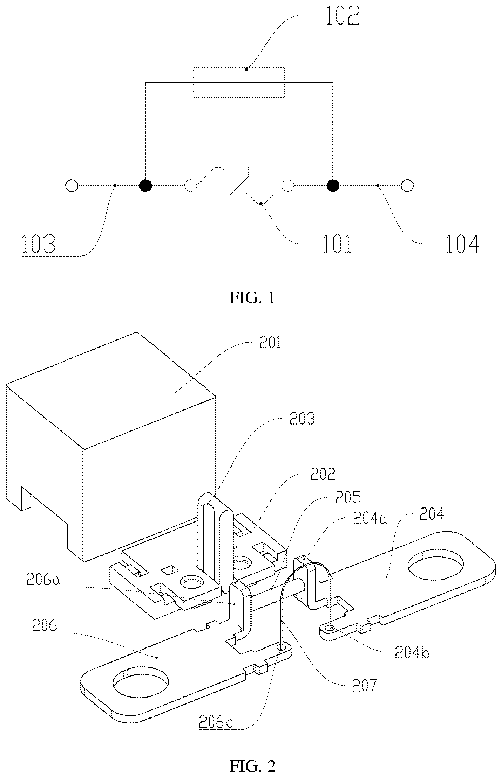

As shown in FIG. 1, the temperature fuse device 101 and the high-voltage breaking device 102 are connected in parallel, wherein the temperature fuse device 101 performs an over-temperature fusing function, and the high-voltage breaking device 102 includes an n-shaped alloy wire to perform a high-voltage breaking function. Moreover, the first pin 103 and the second pin 104 are connected to two parallel points and lead out, respectively. Because the resistance value and melting point of the high-voltage breaking device 102 are higher than those of the temperature fuse device 101, when a rated current is passed, most of the current-carrying capacity is mainly realized by the temperature fuse device 101. At an instant when the temperature fuse device 101 achieves over-temperature fusing, the high-voltage breaking device 102 remains in an on-state, and the current flows through the high-voltage breaking device 102. The current carrying capacity of the alloy wire of the high-voltage breaking device 102 is set to be less than the rated current, and when the current passes through the alloy wire, with the increase of heat, the alloy wire fuses by itself, and an arc inevitably occurs during the breaking process. Due to the arrangement of parallel segments formed by the n-shaped structure, a high electric field strength exists, electrons repel each other, and an electric arc is elongated to accelerate the recombination and diffusion of free electrons and positive ions, which can quickly cut off the electric arc, perform high-voltage breaking, and protect the safety of the circuitry.

### Embodiment 2

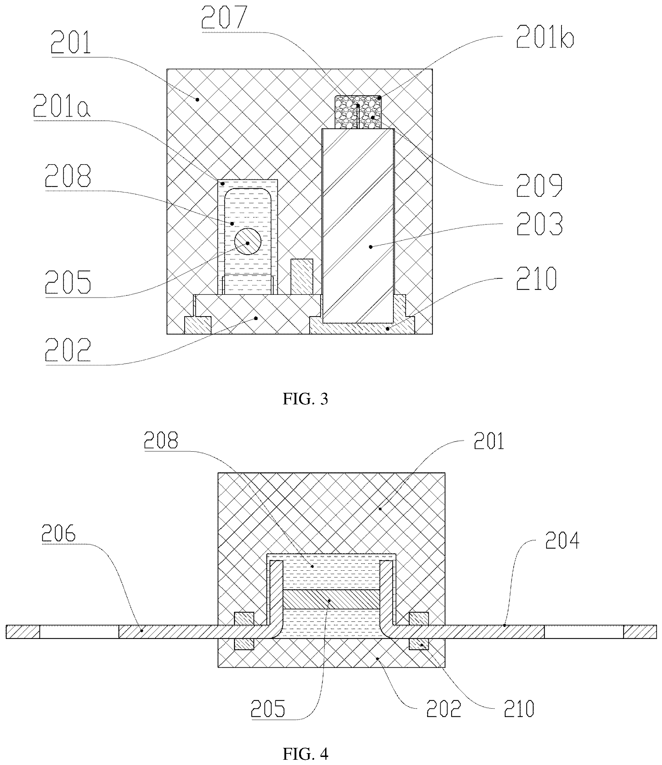

As shown in FIGS 2, 3, 4, and 5, two separate cavities, i.e. the fusing cavity 201a and the breaking cavity 201b, are formed by the outer casing 201, the cover plate 202 and the epoxy resin 210.

The right electrode piece 204 and the left electrode piece 206 are provided. The right electrode piece 204 and the left electrode piece 206 are in a mirror image relationship, and are provided at an interval directly opposite to each other, and are extended out of the outer casing 201 as lead-out ends. The right L-shaped connecting portion 204a and the right-side hole 204b are provided at one end of the right electrode piece 204, respectively, and correspondingly, the left L-shaped connecting portion 206a and the left-side hole 206b are provided at one end of the left electrode piece 206, respectively.

In the fusing cavity 201a, the fusible alloy 205 coated with the fluxing agent 208 is provided between the right L-shaped connecting portion 204a and the left L-shaped connecting portion 206a to form the electrical connection between the right electrode piece 204, the fusible alloy 205 and the left electrode piece 206, thereby constituting a temperature fuse device.

In the breaking cavity 201b, the n-shaped alloy wire 207 is provided between the right-side hole 204b and the left-side hole 206b. One end of the alloy wire 207 is fixed to the right electrode piece 204 through the right soldering tin 211, and the other end of the alloy wire 207 is fixed to the left electrode piece 206 through the left soldering tin 212, thereby forming the electrical connection between the right electrode piece 204, the alloy wire 207 and the left electrode piece 206, and constituting the main body of the high-voltage breaking device. In the breaking cavity 201b, the quartz sand 209 is filled around the alloy wire 207. The breaking insulating stopper 203 is provided between parallel segments of the n-shaped alloy wire 207 to increase the electrical clearance and creepage distance between the right electrode piece 204 and the left electrode piece 206 after the alloy wire 207 is disconnected.

When applied to protection of a new energy passenger car heater, the high-voltage fuse is connected in series with a heating circuit. Under normal conditions, the fusible alloy 205 assumes the main current-carrying function. When the relay of the heating circuit fails and the heating circuit cannot be disconnected, the heater continues to operate and the temperature rises abnormally. When the temperature reaches the softening temperature of the fluxing agent 208, the fluxing agent 208 changes from a solid state to a liquid state and starts to activate the surface oxide layer of the fusible alloy 205. When the temperature reaches the fusing temperature of the fusible alloy 205, the fusible alloy 205 shrinks and moves toward the right L-shaped connecting portion 204a and the left L-shaped connecting portion 206a under the tension of the fluxing agent 208, thereby cutting off the temperature fuse device. All of the current flows through the alloy wire 207 and exceeds the current-carrying capacity of the alloy wire 207. The alloy wire 207 promotes the increase of heat due to its own high resistance to cause the temperature to reach the melting point of the alloy wire 207, and then the alloy wire 207 fuses by itself. An electric arc is inevitably generated during the breaking process. Due to the arrangement of the parallel segments formed by the n-shaped structure, a high electric field strength exists, electrons repel each other, the electric arc is elongated to accelerate the recombination and diffusion of free electrons and positive ions,. Additionally, the quartz sand 209 can absorb the impact of arc gasification and separate the electric arc. Therefore, the electric arc is quickly cut off, the high-voltage breaking is performed, and the safety of the circuitry is protected.

### Embodiment 3

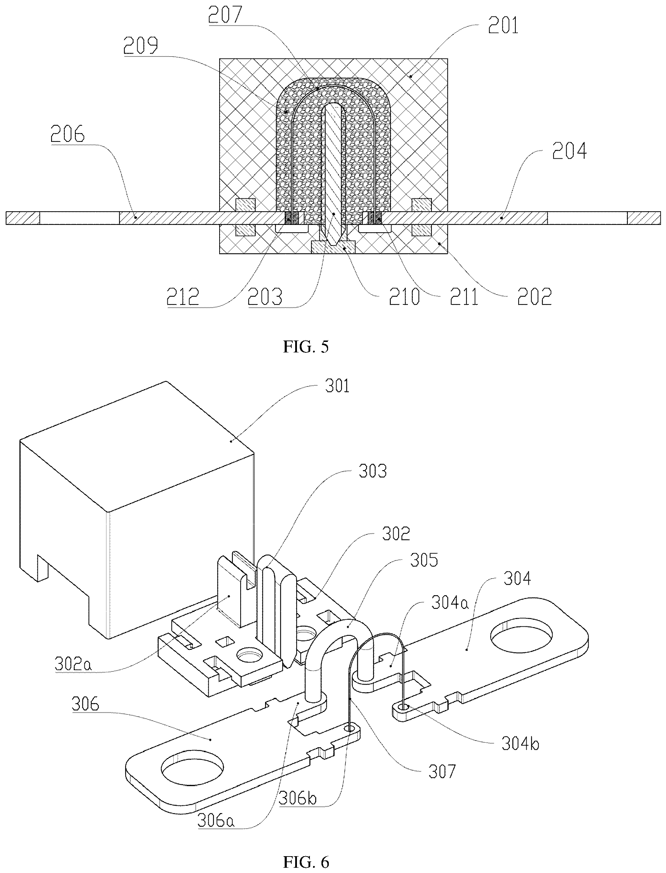

As shown in FIG. 6, two separate cavities formed by the outer casing 301 and the cover plate 302 are provided with the right electrode piece 304 and the left electrode piece 306, respectively. The right electrode piece 304 and the left electrode piece 306 are in a mirror image relationship, and are provided at an interval directly opposite to each other, and the right electrode piece 304 and the left electrode piece 306 are exposed to the outer casing 301 from opposite ends. The right boss 304a and a right-side hole 304b are provided at one end of the right electrode piece 304, respectively, and the left boss 306a and correspondingly, the left-side hole 306b are provided at one end of the left electrode piece 306, respectively.

In one of the cavities of the outer casing 301, the n-shaped fusible alloy 305 coated with the fluxing agent is provided between the right boss 304a and the left boss 306a to form the electrical connection between the right electrode piece 304, the fusible alloy 305 and the left electrode piece 206, thereby constituting a temperature fuse device. Moreover, in this cavity, the fusing insulating stopper 302a is provided on the cover plate 302, thereby increasing the creepage distance and electrical clearance after the fusible alloy 305 is disconnected.

In another one of the cavities of the outer casing 301, the n-shaped alloy wire 307 is provided between the right-side hole 304b and the left-side hole 306b. One end of the alloy wire 307 is fixed to the right-side hole 304b on the right electrode piece 304 through the soldering tin, and the other end of the alloy wire 307 is fixed to the left-side hole 306b on the left electrode piece 306 through the soldering tin, thereby forming the electrical connection between the right electrode piece 304, the alloy wire 307 and the left electrode piece 306, and constituting the main body of the high-voltage breaking device. Moreover, in this cavity, the quartz sand is filled around the alloy wire 307. The breaking insulating stopper 303 is provided between parallel segments of the n-shaped alloy wire 307 to increase the electrical clearance and creepage distance between the right electrode piece 304 and the left electrode piece 306 after the alloy wire 307 is disconnected.

When applied to protection of an electric bus heater, the high-voltage fuse is connected in series with a heating circuit. Under normal conditions, the fusible alloy 305 assumes the main current-carrying function. When the relay of the heating circuit fails and the heating circuit cannot be disconnected, the heater continues to operate and the temperature rises abnormally. When the temperature reaches the softening temperature of the fluxing agent, the fluxing agent changes from a solid state to a liquid state and starts to activate the surface oxide layer of the fusible alloy 305. When the temperature reaches the fusing temperature of the fusible alloy 305, the fusible alloy 305 shrinks and moves toward the right boss 304a and the left boss 306a on both sides under the tension of the fluxing agent, thereby cutting off the temperature fuse device. All of the current flows through the alloy wire 307 and exceeds the current-carrying capacity of the alloy wire 307. The alloy wire 207 promotes the increase of heat due to its own high resistance, to cause the temperature reach the melting point of the alloy wire 307, and then the alloy wire 207 fuses by itself. An electric arc is inevitably generated during the breaking process. Due to the arrangement of the parallel segments formed by the n-shaped structure, a high electric field strength exists, electrons repel each other, the electric arc is elongated to accelerate the recombination and diffusion of free electrons and positive ions. Additionally, the quartz sand can absorb the impact of arc gasification and separate the electric arc. Therefore, the electric arc is quickly cut off, the high-voltage breaking is performed, and the safety of the circuitry is protected.

## Claims

1. A high-voltage fuse, comprising a temperature fuse device (101), configured to perform an over-temperature fusing function, and a high-voltage breaking device (102), configured to remain in an on-state when the temperature fuse device (101) achieves over temperature fusing, wherein the temperature fuse device (101) and the high-voltage breaking device (102) are connected in parallel; the high-voltage breaking device (102) comprises a fuse link configured to perform a high-voltage breaking function; and a resistance value of the temperature fuse device (101) is lower than a resistance value of the fuse link, and a melting point of the temperature fuse device (101) is lower than a melting point of the fuse link, and further comprising a right electrode piece (204, 304) and a left electrode piece (206, 306) and an insulating casing, wherein, a first end of the temperature fuse device is connected to the left electrode piece, and a second end of the temperature fuse device is connected to the right electrode piece; a first end of the high-voltage breaking device is connected to the left electrode piece, and a second end of the high-voltage breaking device is connected to the right electrode piece; the temperature fuse device and the high-voltage breaking device are packaged in the insulating casing; and the left electrode piece and the right electrode piece are extended out of the insulating casing as lead-out ends, wherein
the temperature fuse device (101) comprises a fusing cavity (201a) wherein a fusible alloy (205) coated with a fluxing agent (208) is provided between a right L-shaped connecting portion (204a) and a left L-shaped connecting portion (206a) to form the electrical connection between the right electrode piece (204), the fusible alloy (205) and the left electrode piece (206), **characterized in that**
the high-voltage breaking device comprises a breaking cavity (201b), wherein a n-shaped alloy wire (207) is provided between a right-side hole (204b) and a left-side hole (206b), one end of the alloy wire (207) is fixed to the right electrode piece (204) through the right soldering tin (211), and the other end of the alloy wire (207) is fixed to the left electrode piece (206) through the left soldering tin (212), thereby forming the electrical connection between the right electrode piece (204), the alloy wire (207) and the left electrode piece (206); and
the fuse link is an n-shaped structure, which includes an alloy wire (207, 307), and parallel segments of the fuse link are arranged at both ends of the fuse link, respectively; and wherein the right electrode piece (204, 304) and the left electrode piece (206, 306) in their respective entirety are in a same plane and a mirror image relationship, and are provided at an interval directly opposite to each other and the alloy wire (207, 307) is fixed at one end to a right-side hole (204b, 304b) on the right electrode piece (204, 304) and fixed at the other end to a left-side hole on the left electrode piece (206, 306), and
the high-voltage breaking device (102) further comprises a breaking insulating stopper (203) provided between the parallel segments of the fuse link.

2. The high-voltage fuse according to claim 1, wherein, the temperature fuse device (101) comprises a plurality of fusible alloys (205, 305) , and a surface of each fusible alloy (205) of the plurality of fusible alloys is coated with a fluxing agent (208).

3. The high-voltage fuse according to claim 2, wherein, the plurality of fusible alloys (205, 305) are connected in parallel.

4. The high-voltage fuse according to claim 3, wherein, one fusible alloy of the plurality of fusible alloys (205, 305) has a lowest resistivity and a highest melting point in the plurality of fusible alloys.

5. The high-voltage fuse according to any one of claims 2-4, wherein, the each fusible alloy (205, 305) is an n-shaped structure, parallel segments of the each fusible alloy are arranged at both ends of the each fusible alloy, respectively, and a fusing insulating stopper (203, 303) is provided between the parallel segments of the each fusible alloy.

6. The high-voltage fuse according to claim 1, wherein, the insulating casing, the left electrode piece (206), the right electrode piece (304) and the high-voltage breaking device (102) enclose a breaking cavity (201b) , and the insulating casing, the left electrode piece (206), the right electrode piece (304) and the temperature fuse device (101) enclose a fusing cavity (201a).

7. The high-voltage fuse according to claim 8, wherein, the breaking cavity (201b) is filled with an arc-extinguishing medium.

8. The high-voltage fuse according to any one of claims 6-7, wherein, each of the left electrode piece (206) and the right electrode piece (304) comprises an L-shaped connecting portion (206a, 204a), and the L-shaped connecting portion (206a, 204a) and the temperature fuse device (101) are vertically welded.

## Patentansprüche

1. Hochspannungssicherung, umfassend eine Temperatursicherungsvorrichtung (101), die dazu konfiguriert ist, eine Übertemperatursicherungsfunktion auszuüben, und eine Hochspannungstrennvorrichtung (102), die dazu konfiguriert ist, in einem Einschaltzustand zu bleiben, wenn die Temperatursicherungsvorrichtung (101) die Übertemperatursicherung vollzieht, wobei die Temperatursicherungsvorrichtung (101) und die Hochspannungstrennvorrichtung (102) parallel geschaltet sind; wobei die Hochspannungstrennvorrichtung (102) eine Sicherungsverbindung umfasst, die dazu konfiguriert ist, eine Hochspannungstrennfunktion auszuüben; und ein Widerstandswert der Temperatursicherungsvorrichtung (101) niedriger als ein Widerstandswert der Sicherungsverbindung ist und ein Schmelzpunkt der Temperatursicherungsvorrichtung (101) als ein Schmelzpunkt der Sicherungsverbindung ist, und ferner umfassend ein rechtes Elektrodenstück (204, 304) und ein linkes Elektrodenstück (206, 306) und ein Isoliergehäuse, wobei ein erstes Ende der Temperatursicherungsvorrichtung mit dem linken Elektrodenstück verbunden ist und ein zweites Ende der Temperatursicherungsvorrichtung mit dem rechten Elektrodenstück verbunden ist; ein erstes Ende der Hochspannungstrennvorrichtung mit dem linken Elektrodenstück verbunden ist und ein zweites Ende der Hochspannungstrennvorrichtung mit dem rechten Elektrodenstück verbunden ist; die Temperatursicherungsvorrichtung und die Hochspannungstrennvorrichtung in dem Isoliergehäuse verkapselt sind; und das linke Elektrodenstück und das rechte Elektrodenstück sich als Leitungsenden aus dem Isoliergehäuse erstrecken, wobei
die Temperatursicherungsvorrichtung (101) ein Sicherungshohlraum (201a) umfasst, wobei eine Schmelzlegierung (205), die mit einem Flussmittel (208) beschichtet ist, zwischen einem rechten L-förmigen Verbindungsabschnitt (204a) und einem linke L-förmigen Verbindungsabschnitt (206a) bereitgestellt ist, um eine elektrische Verbindung zwischen dem rechten Elektrodenstück (204), der Schmelzlegierung (205) und dem linken Elektrodenstück (206) zu bilden, **dadurch gekennzeichnet, dass**
die Hochspannungstrennvorrichtung einen Trennhohlraum (201b) umfasst, wobei ein n-förmiger Legierungsdraht (207) zwischen einem rechten Loch (204b) und einem linken Loch (206b) bereitgestellt ist, ein Ende des Legierungsdraht (207) an dem rechten Elektrodenstück (204) durch rechtes Lötzinn (211) fixiert ist und das andere Ende des Legierungsdrahts (207) an dem linken Elektrodenstück (206) durch linkes Lötzinn (212) fixiert ist, wodurch die elektrische Verbindung zwischen dem rechte Elektrodenstück (204), dem Legierungsdraht (207) und dem linken Elektrodenstück (206) gebildet wird; und
die Sicherungsverbindung eine n-förmige Struktur ist, die einen Legierungsdraht (207, 307) beinhaltet, und an den beiden Enden der Sicherungsverbindung parallele Segmente der Sicherungsverbindung angeordnet sind; und wobei das rechte Elektrodenstück (204, 304) und das linke Elektrodenstück (206, 306) jeweils insgesamt in derselben Ebene liegen und zueinander spiegelbildlich sind und in einem Abstand unmittelbar gegenüber voneinander bereitgestellt sind und der Legierungsdraht (207, 307) an einem Ende an einem rechten Loch (204b, 304b) am rechten Elektrodenstück (204, 304) fixiert ist und am anderen Ende an einem linken Loch am linken Elektrodenstück (206, 306) fixiert ist, und die Hochspannungstrennvorrichtung (102) ferner einen Trennisolierungsverschluss (203) beinhaltet, der zwischen den parallelen Segmente der Sicherungsverbindung bereitgestellt ist.

2. Hochspannungssicherung nach Anspruch 1, wobei die Temperatursicherungsvorrichtung (101) eine Vielzahl von Schmelzlegierungen (205, 305) umfasst und eine Fläche jeder Schmelzlegierung (205) der Vielzahl von Schmelzlegierungen mit einem Flussmittel (208) beschichtet ist.

3. Hochspannungssicherung nach Anspruch 2, wobei die Vielzahl von Schmelzlegierungen (205, 305) parallel geschaltet ist.

4. Hochspannungssicherung nach Anspruch 3, wobei eine Schmelzlegierung der Vielzahl von Schmelzlegierungen (205, 305) unter der Vielzahl von Schmelzlegierungen einen niedrigsten Widerstand und einen höchsten Schmelzpunkt aufweist.

5. Hochspannungssicherung nach einem der Ansprüche 2-4, wobei jede Schmelzlegierung (205, 305) eine n-förmige Struktur ist, an beiden Enden jeder Schmelzlegierung parallele Segmente der Schmelzlegierung angeordnet sind und ein Schmelzisolierverschluss (203, 303) zwischen den parallelen Segmenten jeder Schmelzlegierung bereitgestellt ist.

6. Hochspannungssicherung nach Anspruch 1, wobei das Isoliergehäuse, das linke Elektrodenstück (206), das rechte Elektrodenstück (304) und die Hochspannungstrennvorrichtung (102) einen Trennhohlraum (201b) umschließen und das Isoliergehäuse, das linke Elektrodenstück (206), das rechte Elektrodenstück (304) und die Temperatursicherungsvorrichtung (101) einen Sicherungshohlraum (201a) umschließen.

7. Hochspannungssicherung nach Anspruch 8, wobei der Trennhohlraum (201b) mit einem Antilöschmittel gefüllt ist.

8. Hochspannungssicherung nach einem der Ansprüche 6-7, wobei das linke Elektrodenstück (206) und das rechte Elektrodenstück (304) jeweils einen L-förmigen Verbindungsabschnitt (206a, 204a) umfassen und der L-förmige Verbindungsabschnitt (206a, 204a) und die Temperatursicherungsvorrichtung (101) are vertikal geschweißt sind.

## Revendications

1. Un fusible haute tension, comprenant un dispositif à fusible thermique (101), configuré pour remplir une fonction de fusion de sur-température, et un dispositif de coupure haute tension (102), configuré pour rester en état de marche lorsque le dispositif de fusible thermique (101) effectue une fusion de sur-température, dans lequel le dispositif de fusible thermique (101) et le dispositif de coupure haute tension (102) sont connectés en parallèle ; le dispositif de coupure haute tension (102) comprend une liaison fusible configurée pour remplir une fonction de coupure haute tension ; et la valeur de résistance du dispositif de fusible thermique (101) est inférieure à la valeur de résistance de la liaison fusible, et le point de fusion du dispositif de fusible thermique (101) est inférieur au point de fusion de la liaison fusible, et comprenant en outre une partie d'électrode droite (204, 304) et une partie d'électrode gauche (206, 306) et un boîtier isolant, dans lequel, une première extrémité du dispositif de fusible thermique est connectée à la partie d'électrode gauche, et une deuxième extrémité du dispositif de fusible thermique est connectée à la partie d'électrode droite ; une première extrémité du dispositif de coupure haute tension est connectée à la partie d'électrode gauche, et une deuxième extrémité du dispositif de coupure haute tension est connectée à la partie d'électrode droite ; le dispositif à fusible thermique et le dispositif de coupure haute tension sont conditionnés dans le boîtier isolant ; et la partie d'électrode gauche et la partie d'électrode droite se prolongent à l'extérieur du boîtier isolant par des extrémités de sortie, dans lequel
le dispositif de fusible thermique (101) comprend une cavité de fusion (201a) dans laquelle un alliage fusible (205) revêtu d'un agent fluxant (208) est agencé entre une portion de connexion droite en forme de L (204a) et une portion de connexion gauche en forme de L (206a) pour former la connexion électrique entre la partie d'électrode droite (204), l'alliage fusible (205) et la partie d'électrode gauche (206), **caractérisé en ce que**
le dispositif de coupure haute tension comprend une cavité de coupure (201b), dans laquelle un câble en alliage en forme de n (207) est agencé entre un trou de côté droit (204b) et un trou de côté gauche (206b), une extrémité du câble en alliage (207) est fixée à la partie d'électrode droite (204) via l'étain de soudure droit (211), et l'autre extrémité du câble en alliage (207) est fixée sur la partie d'électrode gauche (206) via l'étain de soudure gauche (212), formant ainsi la connexion électrique entre la partie d'électrode droite (204), le câble alliage (207) et la partie d'électrode gauche (206) ; et
la liaison fusible est une structure en forme de n, qui inclut un câble en alliage (207, 307), des segments parallèles de la liaison fusible sont agencées aux deux extrémités de la liaison fusible, respectivement ; et dans laquelle la partie d'électrode droite (204, 304) et la partie d'électrode gauche (206, 306) dans leurs intégralités respectives sont sur le même plan et dans une relation d'image-miroir, et sont agencées à un intervalle directement mutuellement opposé et le câble en alliage (207, 307) est fixé à une extrémité d'un trou du côté droit (204b, 304b) sur la partie d'électrode droite (204, 304) et est fixé à l'autre extrémité à un trou du côté gauche sur la partie d'électrode gauche (206, 306), et le dispositif de coupure haute tension (102) comprend en outre une butée isolante de coupure (203) fournie entre les segments parallèles de la liaison fusible.

2. Un fusible haute tension selon la revendication 1, dans lequel, le dispositif à fusible thermique (101) comprend une pluralité d'alliages fusibles (205, 305), et la surface de chaque alliage fusible (205) de la pluralité d'alliages fusibles est revêtue d'un agent fluxant (208).

3. Un fusible haute tension selon la revendication 2, dans lequel, la pluralité d'alliages fusibles (205, 305) est connectée en parallèle.

4. Un fusible haute tension selon la revendication 3, dans lequel, un alliage fusible de la pluralité d'alliages fusibles (205, 305) dispose de la plus faible résistivité et du point de fusion le plus élevé dans la pluralité d'alliages fusibles.

5. Un fusible haute tension selon l'une quelconque des revendications 2-4, dans lequel, chaque alliage fusible (205, 305) est une structure en forme de n, les segments parallèles de chaque alliage fusible sont agencés aux deux extrémités de chaque alliage fusible, respectivement, et une butée isolante de fusion (203, 303) est agencée entre les segments parallèles de chaque alliage fusible.

6. Un fusible haute tension selon la revendication 1, dans lequel, le boîtier isolant, la partie d'électrode gauche (206), la partie d'électrode droite (304) et le dispositif de coupure haute tension (102) renferment une cavité de coupure (201b), et le boîtier isolant, la partie d'électrode gauche (206), la partie d'électrode droite (304) et le dispositif à fusible thermique (101) renferment une cavité de fusion (201a).

7. Un fusible haute tension selon la revendication 8, dans lequel, la cavité de coupure (201b) est remplie d'un agent d'extinction d'arc.

8. Un fusible haute tension selon l'une quelconque des revendications 6-7, dans lequel, chaque partie d'électrode gauche (206) et partie d'électrode droite (304) comprend une portion de connexion en forme de L (206a, 204a), et la portion de connexion en forme de L (206a, 204a) et le dispositif à fusible thermique (101) sont soudés verticalement.
